Europäisches Patentamt

European Patent Office

Office européen des brevets

(19)

(11) Publication number: **0 289 759 B1**

(12) **EUROPEAN PATENT SPECIFICATION**

(45) Date of publication of patent specification: **12.02.92**

(51) Int. Cl.⁵: **H02K 15/10**

(21) Application number: **88104316.0**

(22) Date of filing: **18.03.88**

(54) **Machine for driving and variable length cutting of the armature paper of the electric motors rotor.**

(30) Priority: **06.05.87 IT 6739087**

(43) Date of publication of application:
**09.11.88 Bulletin 88/45**

(45) Publication of the grant of the patent:
**12.02.92 Bulletin 92/07**

(84) Designated Contracting States:
**CH DE ES FR GB LI NL SE**

(56) References cited:
**FR-A- 1 574 500**
**US-A- 4 136 433**
**US-A- 4 449 289**

(73) Proprietor: **AXIS S.p.A.**

**I-50028 Tavarnelle Val di Pesa Firenze(IT)**

(72) Inventor: **Santandrea, Luciano**
**Via Aldo Moro n. 77**
**I-55028 Tavarnelle Val Di Pesa Firenze(IT)**
Inventor: **Lombardi, Massimo**
**Via Bacio da Montelupo n. 131**
**Casellina Firenze(IT)**

(74) Representative: **Lotti, Giorgio**
**c/o Ing. Barzanò & Zanardo Milano S.p.A. Via Cernaia 20**
**I-10122 Torino(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

Subject of the invention is a machine for driving and variable length cutting of the paper which has to be inserted in slots of electric motor components, in particular armatures.

One of the purposes of the invention is to propose a machine able to obtain a minimum length difference among the various insulating elements required for electric motor component of a given size.

Purpose of the invention is also to propose a machine able to automatically vary the length of the insulating paper according to the electric motor component which must be processed.

US 4136433 and FR 1574500 disclose machines for the production and insertion of insulating elements for electric motor components comprising means for feeding the paper from a supply roll and means for shaping the paper in order to fit it in a slot of the motor component; these machines further comprise means for obtaining that a predetermined length of the paper can be cut, and means for inserting the shaped and cut insulating element into the motor component slot.

However, US 4136433 proposes manual adjustment for variating the paper feed in order to obtain insulating elements of desired length and FR 1574500 proposes a variable ledge and a cutting blade which are positioned at different predetermined distances with respect to one another in order to obtain insulating elements of different sizes for variations in the width of stator slots.

The above prior art, therefore, do not obtain the objects of the present invention that have been stated in the foregoing.

For the above scopes the invention propose, therefore, a machine for driving and variable length cutting of the paper which has to be inserted in slots of electric motor components as claimed in claim 1.

A description of the machine according to the invention follows and reference is made to the enclosed drawings:

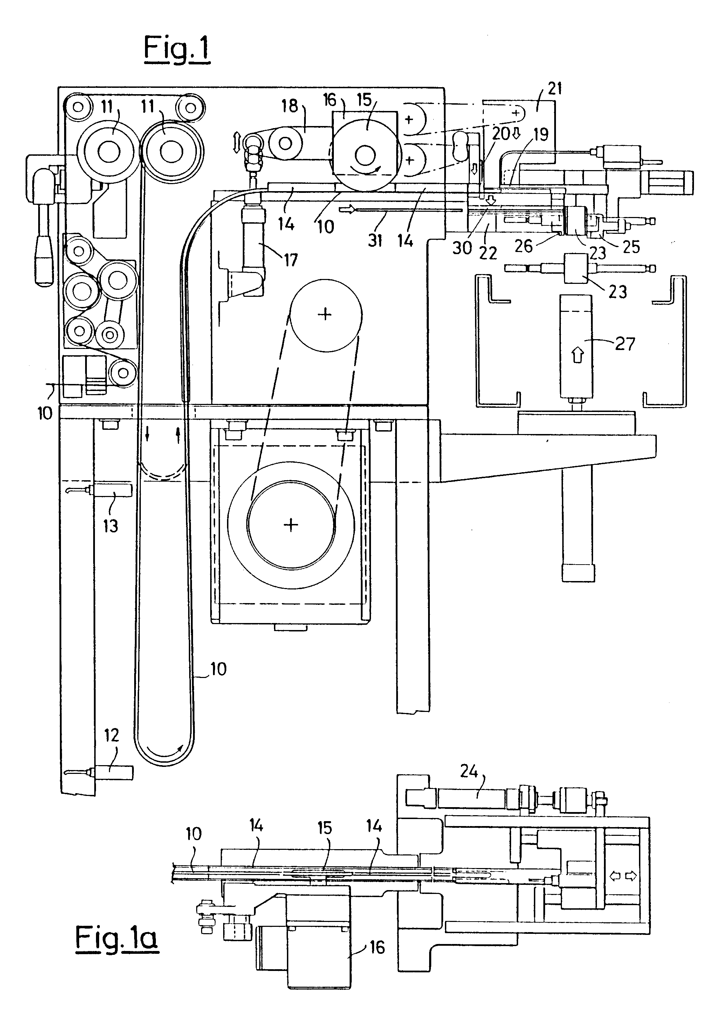

Fig. 1
is a longitudinal sectional view of an illustrative embodiment of the machine of this invention.
Fig. 1a
is a partialtop view of the machine of Fig. 1.
Figs. 2a, 2b and 2c
are enlarged views of a portion of the machine illustrated in Fig. 1 showing three different operating positions.
Fig. 3
is a perspective view of a portion of the machine.
Figs. 4 and 5
are enlarged view of a portion of the machine shown in two different operating positions.

The paper belt 10 is continuously fed between two rollers 11 (see Fig. 1) from an external paper supply coil or roll (not illustrated). Rollers 11 shape and engrave the paper in a predetermined pattern so that when the paper is subsequently inserted in the slots of the rotor, it conforms to the shape of the slot in the best possible way. The paper belt or web 10, formed by the rollers 11, performs a free downward descent, forming a loop which is limited in size by two photocells 12 and 13, which give the maximum loop length and the minimum loop length, respectively.

When paper 10 reaches the loop top, two paper guides 14, exact with respect to the paper's width, guide the paper while a wheel 15, covered with wear-resisting material and rotated by a geared motor 16, pushes the paper onwards, by means of frictional engagement of the paper. A cylinder 17, the pressure of which is adjusted by a gauge, operates the lever 18 on which geared motor 16 is assembled. Geared motor 16 drives paper drive wheel 15.

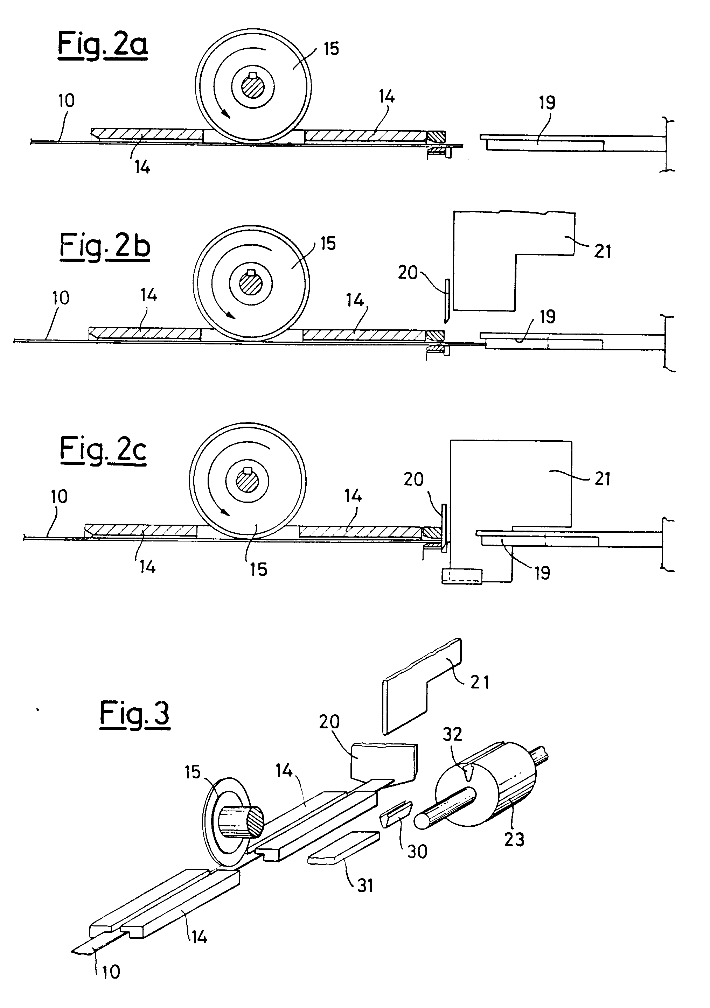

The friction between wheel 15 and paper 10 makes the paper move between guides 14 until it rests against ledge 19. A kinematic assembly commands cutting blade 20, to cut the paper. Plate 21 pushes the cut paper downward and inserts it in a portion 22 of the fixture having the shape of the armature stack slot, this bends the paper along a longitudinal median in order to give it the definite shape 30 (fig. 3). At this point, an inserting device 31 pushes the shaped paper into the slots 32 of the armature stack 23.

When the cutting blade goes up again, wheel 15 (which was slipping on the remaining paper against cutting blade 20), feeds the paper at the maximum speed, making it hit against ledge 19. The paper, having reached the desired length without mistakes, waits to be cut again and rubber wheel 15 begins to slip again.

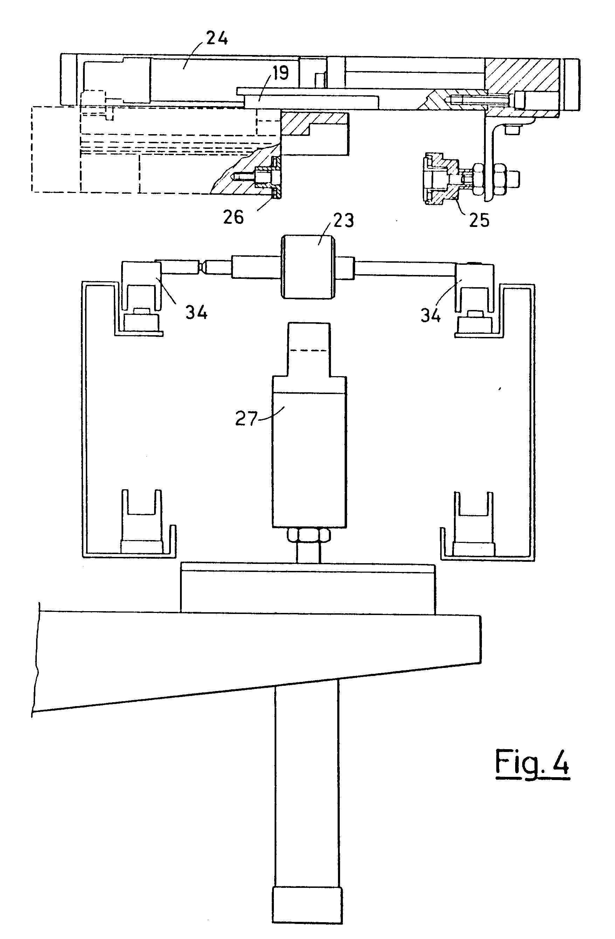

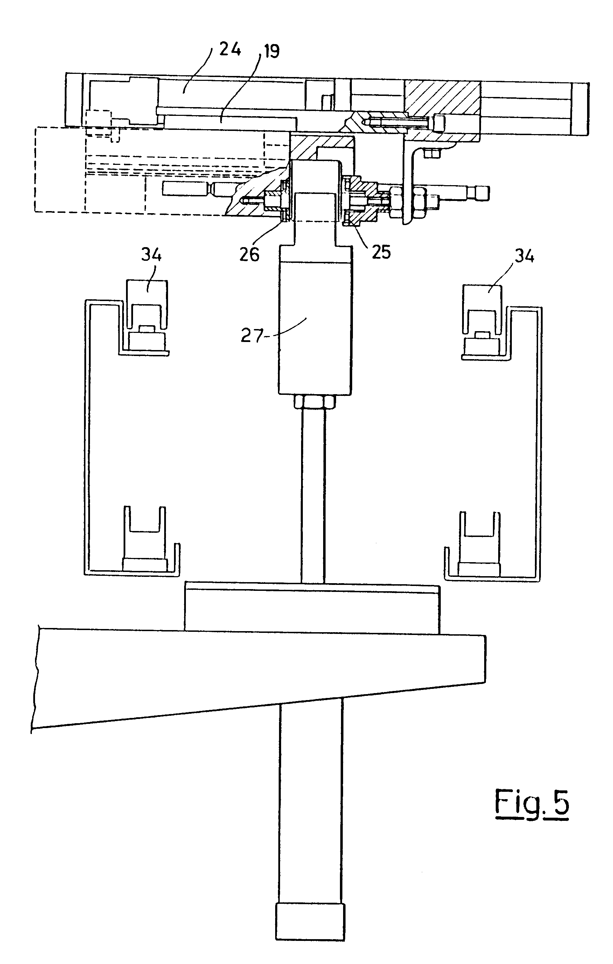

When the insulation of rotor 23 is complete, ledge 19, which is moved by cylinder 24 (fig. 1a), moves backward and jaw 27 places armature 23 back on coveyor 34 (fig. 4). Conveyor 34 performs a step, presents a new armature 23, and lifts it in the paper insertion area. The cylinder 24, with thrust blocks 25 and 26, are moved to bear on the new rotor 23. Thrust blocks 25 and 26 are connected by a predetermined dimension to paper ledge 19, so that according to the height of the armature, thrust blocks 25 and 26, and ledge 19, will conform themselves to such height, thus determining the length of the cut paper, which must be equal to the height of the armature stack. This also recovers the height tolerance of the armature stack.

With regard to the paper driving system, a cylinder 17, the pressure of which can be adjusted, operates lever 18 which carries geared motor 16. The geared motor drives paper drive wheel 15. Paper 10, having been inserted in guides 14, is pushed against ledge 19 by wheel 15; as soon as it reaches ledge 19, wheel 15 slips on paper 10. The machine carries out the shaping, cutting, and insertion functions as described above. When the operators of the machine are reset, the paper is released, and it accomplishes another step forward.

Regarding the automatic detection of the length of the paper, which must be equal to the height of the armature stack, jaw 27 lifts rotor 23 off the conveyor, and cylinder 24, by means of thrust blocks 25, pushes the armature stack 23 until it bears against thrust blocks 26, which are on the side of the paper shaping fixture 22.

The ledge 19, where the paper 10 bears and is fed by wheel 15, is assembled integral to cylinder 24.

The length of the paper for each rotor 23 equal to the height of the armature stack is thus determined; the differences which could have existed between the paper and the armature stack, caused by the armature's wide tolerance, are thus recovered.

## Claims

1. Machine for driving and variable length cutting of paper which is to be inserted in slots of electric motor components, in particular armatures, comprising means for feeding the paper from a supply roll to shaping rollers (11) and subsequently against a variable position ledge (19); between the shaping rollers (11) and tile ledge (19) there being inserted a paper cutting blade (20) and between the blade (20) and the ledge (19) there being located transfer devices (21) for the transfer of the cut paper to a bending fixture (22) which bends the paper to the shape of the slot (23) into which it is pushed by inserting devices (30, 31); means for positioning the motor component in the required position to receive the paper, characterized in that the machine further comprises devices for detecting the stack slot height directly connected to the variable position of the ledge (19) in order to equalize the length of the cut paper with the height of the slots in which it is inserted.

2. Machine according to claim 1 characterized in that between the feeding means and the variable ledge (19) the paper (10) performs a free loop having minimum and maximum lenght controlled by respective photocells (12 and 13).

3. Machine according to claims 1 and 2 characterized in that a pressure wheel (15) is located after the sheping rollers (11) for feeding the paper from the free loop and for pushing the paper from the free loop and for pushing it against the variable ledge (19).

4. Machine according to claim 3 characterized in that the pressure wheel (15) is kept pressed on the paper by means of a lever (18) operated by a cylinder (17) in order to push the paper against the ledge (19) and then to slip on it during each cutting cycle.

5. Machine according to claim 1 characterized in that the elements (25, 26) for detecting the slot height are thrust blocks which bear against the end of the stack slots, and where at least one thrust block (25) is movable and connected to a cylinder (24) which positions the ledge (19) with respect to the blade (20) at a distance from it which is substantially equal to the distance between the thrust blocks (25, 26) after they have come to bear against the stack slots.

6. Machine according to claim 1 characterized in that the means for positioning the motor component are a conveyor (34), for feeding the component, and locking elements (24, 25) for translating the motor component from the conveyor (34) in the required position for receiving the paper.

7. Machine according to claims 5 and 6 characterized in the devices for detecting the stack slot height are the same elements (25, 26) for locking the stack in the position suitable to receive the paper.

## Revendications

1. Machine pour l'entraînement et la coupe à longueur variable du papier qui doit être introduit dans les encoches de composants de moteurs électriques, en particulier d'induits, comprenant un moyen pour fournir le papier à des rouleaux (11) de mise en forme en provenance d'une bobine d'alimentation et ensuite contre un rebord (19) à position variable ; entre les rouleaux de mise en forme (11) et le rebord (19) une lame de coupe (20) du papier étant introduite et, entre la lame (20) et le rebord (19), des dispositifs de transfert (21) étant disposés pour le transfert du papier coupé à un organe fixe d'incurvation (22) qui incurve le papier à la configuration de l'encoche (23) dans laquelle il doit être poussé par des dispositifs d'introduction (30, 31); un moyen pour mettre en position les composants du moteur à la position requise pour recevoir le papier, caractérisée en ce que la machine comprend en outre des dispositifs pour détecter la hauteur d'empilement des encoches des tôles directement réunis à la position variable du rebord (19) afin d'égaliser la longueur du papier coupé avec la hauteur des encoches dans lesquelles il doit être introduit.

2. Machine selon la revendication 1, caractérisée en ce qu'entre le moyen d'alimentation et le rebord variable (19), le papier (10) exécute une boucle libre ayant une longueur minimum et une longueur maximum contrôlée par des cellules photo-électriques respectives (12 et 13).

3. Machine selon les revendications 1 et 2 caractérisée en ce qu'une roue de pression (15) est disposée après les rouleaux de mise en forme (11) pour fournir le papier à partir de la boucle libre et pour pousser le papier à partir de la boucle libre et pour le pousser contre le rebord variable (19).

4. Machine selon la revendication 3, caractérisée en ce que la roue de pression (15) est tenue pressée sur le papier au moyen d'un levier (18) actionné par un vérin (17) afin de pousser le papier contre le rebord (19) et ensuite de le glisser sur lui pendant chaque cycle de coupe.

5. Machine selon la revendication 1, caractérisée en ce que les éléments (25, 26) pour détecter la hauteur des encoches sont des blocs de poussée qui portent contre les extrémités de l'empilement des encoches et où au moins un bloc de poussée (25) est mobile et relié à un vérin (24) qui met en position le rebord (19) par rapport à la lame (20) à une distance de celle-ci qui est substantiellement égale à la distance entre les blocs de poussée (25, 26) lorsque ceux-ci sont venus porter contre les encoches de l'empilement.

6. Machine selon la revendication 1, caractérisée en ce que les moyens pour mettre en position le composant du moteur sont un convoyeur (34) pour fournir le composant, et des éléments de verrouillage (24, 25) pour déplacer le composant du moteur à partir du convoyeur (34) jusqu'à la position requise pour la réception du papier.

7. Machine selon les revendications 5 et 6, caractérisée en ce que les dispositifs pour détecter la hauteur de l'empilement des encoches sont les mêmes éléments (25, 26) que pour verrouiller l'empilage à la position appropriée à la réception du papier.

**Patentansprüche**

1. Maschine für den Antrieb und den verstellbaren Längenschnitt des Papiers, welches in die Nuten von Elektromotor-Komponenten, insbesondere Ankern, einzulegen ist, welche aufweist: Mittel zur Zufuhr des Papiers von einer Vorratsrolle zu Formgebungswalzen (11) und anschliessend zu einem einstellbaren Positionierungsanschlag (19), wobei zwischen den Formgebungswalzen (11) und dem Anschlag (19) eine Papierschneideklinge (20) angeordnet ist, und wobei zwischen der Klinge (20) und dem Anschlag (19) Überführungsvorrichtungen (21) angeordnet sind, um das geschnittene Papier zu einer Biegevorrichtung (22) überzuführen, welche das Papier in die Form der Nut (32), in welche es durch die Einführvorrichtungen (30, 31) einzuführen ist, biegt; sowie Mittel zur Positionierung der Motor-Komponente in der für den Empfang des Papiers benötigten Stellung, dadurch gekennzeichnet, dass die Maschine weiter mit der veränderlichen Stellung des Anschlages (19) direkt verbundene Mittel zur Feststellung der Ankerkörper-Höhe aufweist, um die Länge des geschnittenen Papiers der Länge der Nuten, in welche es einzulegen ist, gleichzumachen.

2. Machine nach Anspruch 1, dadurch gekennzeichnet, dass zwischen den Zuführmitteln und dem einstellbaren Anschlag (19) das Papier (10) eine freie Schleife bildet, deren minimale und maximale Länge durch zugeordnete Photozellen (12, 13) gesteuert wird.

3. Machine nach Anspruch 1 oder 2, dadurch gekennzeichnet, dass nach den Formgebungswalzen (11) ein Druckrad (15) vorgesehen ist, um das Papier aus der freien Schleife abzuziehen, um es von der freien Schleife weiterzufördern und um es gegen den einstellbaren Anschlag (19) zu schieben.

4. Machine nach Anspruch 3, dadurch gekennzeichnet, dass das Druckrad (15) mittels eines durch einen Zylinder (17) betätigten Hebels (18) gegen das Papier gedrückt gehalten wird, um das Papier gegen den Anschlag (19) zu schieben und um dann während jedem Schneidezyklus auf ihm zu gleiten.

5. Maschine nach Anspruch 2, dadurch gekennzeichnet, dass die Elemente (25, 26) zur Feststellung der Nutlänge Druckblöcke sind, welche an die Enden der Ankernuten anliegen, wobei mindestens ein Druckblock (25) beweglich und mit einem Zylinder (24) verbunden ist, welcher den Anschlag (19) bezüglich der Klinge (20) in einem Abstand von dieser positioniert, welcher gleich dem Abstand der Druckblöcke (25, 26), nachdem sie sich an die Ankernuten angelegt haben, ist.

6. Machine nach Anspruch 1, dadurch gekennzeichnet, dass die Mittel zur Positionierung der Motor-Komponente eine Fördervorrichtung (34) zur Zufuhr der Komponente sowie Verriegelungslemente (24, 25) zur Überführung der Motor-Komponente von der Fördervorrichtung (34) in die zur Aufnahme des Papiers benötigte Stellung sind.

7. Maschine nach Ansprüchen 5 und 6, dadurch gekennzeichnet, dass die Vorrichtungen zur Feststellung der Nutlänge dieselben Elemente (25, 26) sind, welche den Ankerkörper in der zur Aufnahme des Papiers geeigneten Stellung verriegeln.

## Fig.1

## Fig.1a

## Fig.2a

10    14    15    14    19

## Fig.2b

10    14    15    14    20    21    19

## Fig.2c

10    14    15    14    20    21    19

## Fig.3

15    14    20    21    32    23    30    31    14    10

24

19

26

25

23

34

34

27

Fig. 4

Fig.5